# EUROPEAN PATENT APPLICATION

(11) **EP 2 272 370 A1**
(43) Date of publication of application: **12.01.2011**
(21) Application number: 10175031.3
(22) Date of filing: 18.01.2006
(51) Int. Cl.: A21D 6/00, A21D 10/02

(54) **Refrigerated dough and product in low pressure container**

(30) Priority: 18.01.2005 US 644915 P
(62) Divisional of application: 06718977.9
(71) Applicant: GENERAL MILLS MARKETING, INC., Minneapolis, MN 55440 (US)
(72) Inventor: El-Afandi, Ali, Maplewood, MN 55117 (US); Citti, James, Minneapolis, MN 55414 (US)
(74) Representative: Vossius & Partner

(57) **Abstract**

Described are refrigerator-stable, chemically-leavened dough compositions, packaged dough products, and methods for preparing the same, wherein the dough compositions can be packaged and stored in a pressurized package. Said dough compositions comprise a basic chemical leavening agent, sodium acid pyrophosphate and sodium aluminium phosphate leavening agents.

## Description

### Field of the Invention

The invention relates to refrigerator-stable, chemically-leavened dough compositions, dough products that include the dough in a pressurized container, and methods for preparing the same.

### Background

Various commercial dough products are sold in pressurized containers, which have an internal pressure that is greater than atmospheric, and typically with current commercial products, greater than two atmospheres absolute. Pressurized packaging configurations are used, for example, for dough products such as chemically-leavened biscuits, sweet rolls, donuts, pizza doughs, rolls, other various forms of breads, as well as many other types of dough and bread products.

Pressurized packages, for example pressurized cans or canisters, can provide convenience and storage stability. Such packages can be easily prepared, handled, stored, and transported, and can be sized to contain a useful number of portions of a raw dough product. Normally, pressurized packages are refrigerator stable and capable of being stored at a refrigerated temperature for extended periods of time, e.g., several weeks, while keeping the contents fresh.

An example of a specific class of pressurized package is a self-sealing can or canister. The interior of the can or canister becomes pressurized due to behavior of the dough composition that is contained by the container walls. After being placed in the package, the dough composition produces carbon dioxide and expands inside of the container. The expanding dough will replace gas from the space inside of the container, seal openings in the container, and then continue to expand to produce an internal pressure.

To contain its pressurized contents, the container and the materials of the container must be of sufficient strength and construction to withstand the internal pressure and prevent breakage of the container due to the pressurized interior. Such strength requirements add to the cost and complication of these pressurized packages. Another drawback of a pressurized package is that when opened by a consumer, the pressurized container often produces a surprising "pop," which can startle a sensitive consumer.

The commercial dough industry has ongoing need for improvements in product and packaging configurations. It is desirable to identify improved dough compositions and combinations of dough compositions and pressurized containers, especially with respect to improving product stability and customer convenience and desirability of use. In particular, there is ongoing need to identify dough compositions that, upon expansion in a pressurized container, function to seal the package, but do not create an unduly high internal pressure. A desirable dough composition could instead create sufficient pressure to seal the container, but not require a package with an unnecessarily high strength. This can reduce strength requirements of the package and at the same time reduce the potential bursting of cans, resulting in reduced waste and reduce cost. Also desirably, a pressurized package, upon opening by the consumer, would produce a relatively subdued "pop," if any, that would not cause the consumer to be startled.

### Summary

The invention relates to dough compositions, dough compositions packaged in pressurized packages, and related methods. Embodiments of the invention involve dough compositions that include a combination of two or more chemical leavening agents (e.g., two or more acidic chemical leavening agents or two or more basic chemical leavening agents, or two or more of both) that react to leaven the dough composition at different times during the preparation, packaging, storage, or use (e.g., cooking), of a dough.

With previous chemically leavened dough products packaged in pressurized containers, the chemical leavening agents react during processing and packaging to cause the dough to expand. Specifically, when a previous dough composition was placed in a self-sealing container, at a processing temperature [e.g., 40 to 72°F (4 to 22°C)], acidic and basic chemical leavening agents would react to produce carbon dioxide, which would cause the dough to expand within the container, to purge the container and to seal the container from inside. The chemical leavening agents would continue to react and the internal pressure of the package would build, generally to at least 15 psig. Upon opening the container the dough would expand to a size greater than the size allowed by the container. Upon cooking, the dough would experience some further amount of expansion due to the expansion of water vapor or gaseous carbon dioxide contained within the dough, e.g., in the form of carbon dioxide absorbed within the dough composition, or based on the presence of gaseous water vapor or carbon dioxide within cells formed in the matrix of the dough. The acidic and basic chemical leavening ingredients contained by such a conventional dough composition would not substantially react following refrigerated storage -- i.e., they would not react during cooking to produce any substantial amount of carbon dioxide that would cause expansion during cooking.

According to the invention, a dough composition includes chemical leavening ingredients that provide carbon dioxide evolution, and consequent expansion of the dough composition, at specifically desired times during the preparation, storage, and cooking of the dough.

A first amount of chemical leavening ingredients can be included in a dough composition to produce carbon dioxide and expansion of the dough composition during or directly following packaging of the dough composition. Specifically, upon placing a dough composition of the invention into a self-sealing container, chemical leavening ingredients ("agents") of the dough composition can react to generate carbon dioxide that will cause the dough composition to generate gaseous carbon dioxide and expand. The gaseous carbon dioxide and expansion of the dough composition will purge gas (air) from the package interior and cause the expanded dough composition to seal the package from inside. Desirably, according to specific embodiments of the invention, the amount of expansion can be enough to cause the package to seal from inside, but is not so much to cause an excessive amount of additional dough expansion, e.g., that would cause the package to achieve an excessive internal pressure, or possibly even to burst, during refrigerated storage.

The dough composition includes another portion, of leavening ingredients that do not strongly react during the processing and packaging processes, but that are intended to react upon cooking of the dough composition.

Thus, in general, a dough composition as described can include a leavening system that effects leavening during different stages of preparation and use, e.g., stages prior to cooking (which can include processing, packaging, and refrigerated storage), and then the cooking stage. The dough compositions contain combinations of chemical leavening agents that become active during these stages of processing and preparation. The chemical leavening ingredients can include various combinations of chemical leavening agents, normally combinations of acidic agent and basic agent, to produce activity in the different stages. For example, a dough composition may contain two different acidic chemical leavening agents having different activities, in combination with a single type of basic chemical leavening agent; one of the acidic agents is active during processing (e.g., packaging) and the other acidic agent is not active until it reaches a temperature that occurs during cooking. Alternately, a dough composition may contain two different basic chemical leavening agents having different activities, in combination with a single type of acidic chemical leavening agent; one of the basic agents is active during processing (e.g., packaging) and the other basic agent is not active until it reaches a temperature that occurs during cooking. In other embodiments, a dough composition may contain two different acidic chemical leavening agents having different activities, in combination with two different types of basic chemical leavening agent having different activities.

The activity of different types of chemical leavening agents can be based on various physical or chemical features of the chemical leavening agents, such as solubility or encapsulation -- e.g., agents that exhibit different solubilities at processing and refrigerated storage temperature compared to at a cooking (e.g., baking) temperature; or encapsulated and non-encapsulated forms of a chemical leavening agent in one dough composition, the non-encapsulated agent being active at processing, packaging, or refrigerated storage temperatures, and the encapsulated agent being substantially non-active at those temperatures but becoming released during cooking (e.g., baking) to contribute to leavening of the dough at that time. Certain specific embodiments of dough compositions of the invention can include encapsulated and non-encapsulated leavening agents (e.g., basic), or high and low solubility leavening agents (e.g., high and low solubility acidic chemical leavening agents), or both.

Advantageously, certain embodiments of the invention can offer a desirably low, controlled internal pressure, e.g., during refrigerated storage, of a packaged dough product that includes a dough composition in a pressurized package. The internal pressure of the pressurized package may be controlled to not exceed a relatively low level during extended refrigerated storage, such as to not exceed 10 pounds per square inch gauge (psig), or to remain within the range from 6 to 8 psig, during extended refrigerated storage. This can be comparably lower than the internal pressure of certain commercial dough products in pressurized canisters, which may exceed 14 or 15 psig. Advantages of being able to control internal pressure during refrigerated storage -- i.e., to maintain a comparably reduced internal pressure - include reduction in broken packages caused by excess internal pressure; the ability to design a pressurized package with lower strength requirements, with attendant reduction in complication and cost of the package; and prevention of overly-loud "popping" upon opening of the pressurized package by a consumer.

An aspect of the invention is a chemically-leavened dough composition packaged in a pressurized container. The dough composition includes dough ingredients that include a chemical leavening system comprising acidic chemical leavening agent and two portions of basic chemical leavening agent, comprising: a processing leavening portion comprising basic chemical leavening agent that reacts to cause the dough to expand at a processing temperature to substantially seal the pressurized container, and a cooking leavening portion comprising basic chemical leavening agent that reacts to produce carbon dioxide during cooking.

Another aspect of the invention relates to a dough product comprising chemically-leavened dough composition in a pressurized can. The dough composition includes dough ingredients that include chemical leavening agent comprising: basic chemical leavening agent, sodium acid pyrophosphate acidic chemical leavening agent that can cause the dough to expand within the canister to produce an internal pressure that does not exceed 5 pounds per square inch gauge after 4 days of refrigerated storage at 45°F (7°C), and sodium aluminum phosphate acidic chemical leavening agent that can react to produce carbon dioxide during cooking.

In another aspect, the invention relates to a refrigerator-stable dough product comprising a chemically-leavened dough composition in a self-scaling pressurized container. The dough composition includes dough ingredients that include chemical leavening agent comprising: non-encapsulated basic chemical leavening agent, sodium acid pyrophosphate, and sodium aluminum phosphate. The chemical leavening agents are sufficient to produce carbon dioxide to expand the dough composition to substantially seal the self sealing pressurized container, and maintain an internal pressure within the container that does not exceed 8 pounds per square inch gauge during the first 12 weeks of refrigerated storage at 45°F (7°C).

In another aspect, the invention relates to a method of preparing a chemically-leavened dough composition packaged in a pressurized container. The method includes providing dough ingredients comprising a chemical leavening system comprising acidic chemical leavening agent and two portions of basic chemical leavening agent: a processing leavening portion comprising basic chemical leavening agent that reacts to cause the dough to expand at a processing temperature to substantially seal the pressurized container, and a cooking leavening portion comprising basic chemical leavening agent that reacts during cooking to expand the dough during cooking. The method includes combining the dough ingredients, placing the dough ingredients in a self-sealing canister and allowing the dough composition to expand to seal the canister, and storing the canister at refrigerated conditions.

In another aspect, the invention relates to a method of preparing a chemically-leavened dough composition in a pressurized can. The method includes providing dough ingredients that include chemical leavening agent comprising: basic chemical leavening agent, a processing portion of acidic chemical leavening agent that can cause the dough to expand within the canister to produce an internal pressure that does not exceed 5 pounds per square inch gauge after 4 days of refrigerated storage at 45°F (7°C), and a cooking portion of acidic chemical leavening agent that can react to produce carbon dioxide during cooking. The method includes combining the dough ingredients, placing the dough ingredients in a self-sealing canister and allowing the dough composition to expand to substantially seal the canister, and storing the canister at refrigerated conditions.

### Brief Description of the Figures

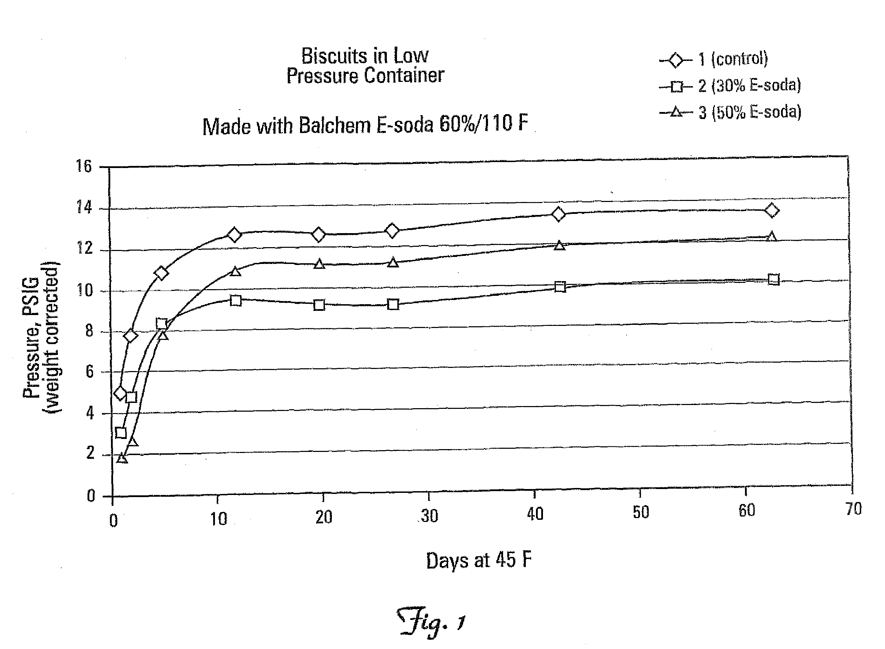

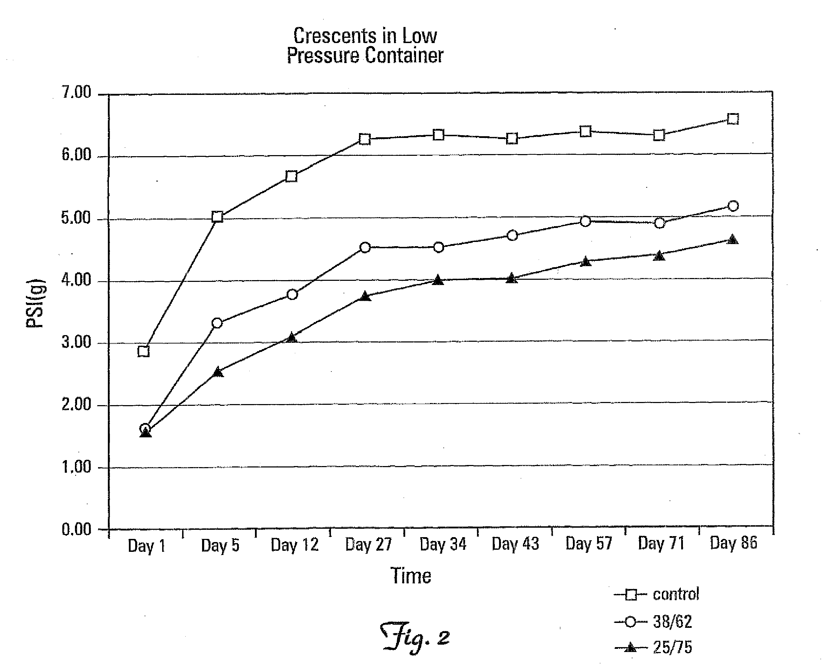

Figures 1 and 2 are graphs of internal pressure of canisters of packaged dough products, relative to time during refrigerated storage.

### Detailed Description

Dough compositions according to the invention are chemically-leavened (or "chemically-leavenable") dough compositions, which include dough compositions that leaven to a substantial extent by the action of chemical ingredients that react to produce a leavening gas. Typically the ingredients include a basic chemical leavening agent and an acidic chemical leavening agent, the two of which react to produce carbon dioxide which, when retained by the dough matrix, causes the dough to expand. Chemically-leavened doughs can be contrasted to dough formulations that are substantially leavened due to the action of yeast as a leavening agent, i.e., by metabolic action of yeast on a substrate to produce gaseous carbon dioxide. While doughs of the invention can include yeast, e.g., as a flavoring agent, certain dough compositions of the invention do not include and can specifically exclude yeast as a leavening agent.

According to the invention, a dough composition can be prepared to be chemically leavened, and to include at least two "portions" or "stages" of chemical leavening agent that exhibit different activity at different stages of preparation, storage, or use of a dough composition, e.g., at least two different types of acidic chemical leavening agent, at least two different types of basic chemical leavening agent, or at least two different types of acidic and basic chemical leavening agents. One portion may be a "processing" stage, which is included to be active to produce carbon dioxide and a desired amount of chemical leavening action during processing, during packaging, or following packaging. The processing stage of chemical leavening agent may dissolve in a dough composition or otherwise become reactive at a processing temperature, to produce carbon dioxide that can cause expansion of a dough composition and that can cause the dough to expand inside of a self-sealing package, in turn causing the package to become substantially sealed from the inside by the dough composition; i.e., sealed sufficiently to allow stable refrigerated storage with internal pressure as described herein. The processing stage may include a basic leavening agent that is active at processing temperature, such as a non-encapsulated ("free") soda or a soluble acidic chemical leavening agent.

A second portion can be a "cooking" or "baking" stage, which is selected to be active and react during cooking or baking to produce additional carbon dioxide, during cooking, to cause additional expansion or leavening. The cooking stage may include a basic or acidic leavening agent that is relatively inactive at processing and refrigerated storage temperature, but that becomes active at cooking temperature, such as an encapsulated soda or an acidic leavening agent that is relatively insoluble at processing temperature and that is relatively soluble at a cooking temperature.

Thus, embodiments of dough compositions of the invention include what can be referred to two portions of chemical leavening ingredients, e.g., a "processing" chemical leavening portion, and a "cooking" chemical leavening portion. The processing chemical leavening portion includes chemical leavening agents that are active and react during processing of a dough composition to produce carbon dioxide that causes the dough composition to expand within a package. The cooking chemical leavening system does not become substantially active during processing or packaging, or during refrigerated storage, but becomes active to produce carbon dioxide during cooking.

The different stages of carbon dioxide evolution by chemical leavening agents can be produced by the use of various combinations of chemical leavening agents that include at least two different chemical leavening acid ingredients or at least two different chemical leavening base ingredients, optionally two different acid ingredients and base ingredients, that will become active at either processing temperatures or baking temperatures. Activity of either an acidic or a basic chemical leavening agent can be selected and controlled, e.g., based on the solubility of different agents, based on encapsulation of each agent (e.g., non-encapsulated versus encapsulated), based on different degrees of encapsulation (e.g., higher or lower degrees of encapsulation and activity of two different encapsulated agents, such as bases), or based on combinations of solubility, encapsulation, and degree of encapsulation.

Acidic chemical leavening agents are generally known in the dough and bread-making arts, with examples including sodium aluminum phosphate (SALP), sodium acid pyrophosphate (SAPP), monosodium phosphate, monocalcium phosphate monohydrate (MCP), anhydrous monocalcium phosphate (AMCP), dicalcium phosphate dihydrate (DCPD), glucono-delta-lactone (GDL), as well as a variety of others. Acidic chemical leavening agents come in a variety of solubilities at different temperature ranges, and may be either encapsulated or non-encapsulated. Commercially available acidic chemical leavening agents include those sold under the trade names: Levn-Lite® (SALP), Pan-O-Lite® (SALP+MCP), STABIL-9® (SALP+AMCP), PY-RAN® (AMCP), and, HT® MCP (MCP).

Acidic chemical leavening agents that are considered to be of relatively high solubility include agents that are soluble in a liquid (e.g., aqueous) component of a dough composition at a temperature used during processing [e.g., from 40 to about 72°F (4 to about 22°C) or at a refrigerated storage temperature [e.g. from about 32 to about 55°F (0 to about 13°C). Examples of such soluble acidic chemical leavening agents include glucono-delta-lactone and sodium acid pyrophosphate (SAPP) of a moderate to high solubility e.g., SAPP 60, SAPP 80, as well as other acidic chemical leavening agents that exhibit similar solubility behavior.

Other acidic chemical leavening agents are only slightly soluble (e.g., insoluble) at processing and refrigerated temperatures, e.g., are only slightly soluble in an aqueous component of a dough composition at processing and refrigerated storage temperatures. Such insoluble acidic chemical leavening agents can be included in a dough composition to remain relatively insoluble and therefore relatively inactive during processing, packaging, and storage of a dough composition, and then to become dissolved in a dough composition at a temperature experienced during cooking, such that the insoluble acidic chemical leavening agent does not produce carbon dioxide during processing and storage and is available to react with a basic agent to produce carbon dioxide during cooking. Examples of useful insoluble acidic chemical leavening agents include SALP and relatively slower reacting SAPP (e.g., low activity SAPP, for example SAPP-RD-1, 26, 28), as well as other acidic agents that exhibit solubility behavior similar to SALP and low activity SAPP.

Certain embodiments of dough compositions of the invention can include one single type of acidic agent chemical leavening agent that can be active as desired at the different temperatures that occur during processing and cooking of the dough composition. For example, a relatively soluble acidic agent such as soluble SAPP, or a combination of two or more soluble acidic agents, can be included in a dough composition. Such a dough composition may include a single type of acidic agent, e.g., a soluble acid such as soluble SAPP, in combination with two different portions of basic leavening agent, e.g., a free basic agent as a processing portion of chemical leavening agent and an encapsulated basic agent as a cooking or baking portion.

According to other embodiments of dough compositions of the invention, a composition may include a combination of two or more acidic chemical leavening agents having different activity levels, e.g., one acidic agent that is of high solubility (at processing temperatures) that dissolves to a sufficient degree during processing to react with a soluble basic agent to produce carbon dioxide, and another that is sufficiently insoluble to not dissolve or react at processing, packaging, or refrigerated storage temperatures. Examples of acidic chemical leavening agents that can be active at a processing temperature include one or a combination of monosodium phosphate, monocalcium phosphate monohydrate (MCP), anhydrous monocalcium phosphate (AMCP), dicalcium phosphate dihydrate (DCPD), glucono-delta-lactone (GDL), SAPP 60, SAPP 80, etc., in a desired amount, and normally but not necessarily in a non-encapsulated form. A low solubility acidic agent can be as discussed above, e.g., SALP or low activity SAPP, or a combination of two or more low activity acidic agents. In specific embodiments of the invention, a combination of soluble and insoluble acidic agents can be used with a single type of basic agent, such as a free soda, such that the soluble acid and base react to produce carbon dioxide at processing temperature, and the insoluble acid and base react to produce carbon dioxide at a cooking temperature.

The amount of total acidic chemical leavening agent included in a dough composition (including a processing stage and a baking stage) can be an amount sufficient to neutralize a total amount of basic chemical leavening agent in the dough composition, e.g., an amount that is stoichiometric to the total amount of basic chemical leavening agent, with exact amounts being dependent on the particular basic and acidic chemical leavening agents. A typical amount of total acidic chemical leavening agent (e.g., of the same or different type, composition, or activity) such as SALP, SAPP, or combinations of SALP and SAPP, may be in the range from about 0.25 to about 3 weight percent based on the total weight of a dough composition, e.g., from about 0.25 to about 1.5 weight percent based on the total weight of the dough composition (not including any encapsulating agent, if used to encapsulate an acidic agent).

For embodiments of the invention that include two types of acidic agents, such as a soluble acidic leavening agent in combination with an insoluble acidic leavening agent, these can each be present to produce desired carbon dioxide evolution during processing (e.g., packaging) and during cooking. An amount of soluble acidic chemical leavening agent can be an amount in the range from 0.25 to 2 weight percent relatively soluble acidic chemical leavening agent, based on the total weight of a dough composition. An amount of insoluble acidic chemical leavening agent [i.e., insoluble in a dough composition at 40 to 72°F (4 to 22°C)] can be an amount in the range from 0.25 to 2 weight percent relatively insoluble acidic chemical leavening agent, based on the total weight of a dough composition.

Useful basic chemical leavening agents are generally known in the dough and baking arts, and include soda, i.e., sodium bicarbonate (NaHCO₃), potassium bicarbonate (KHCO₃), ammonium bicarbonate (NH₄HCO₃), etc. These and similar types of basic chemical leavening agents are generally soluble in an aqueous phase of a dough composition at processing or refrigerated storage temperature, as well as higher temperatures that occur during cooking.

A basic agent may be encapsulated or non-encapsulated. Both encapsulated and non-encapsulated basic chemical leavening agents are generally known and commercially available, and can be prepared by methods known in the baking and encapsulation arts. An example of a method for producing encapsulated chemical leavening agents by use of a fluidized bed to coat an encapsulating agent over particulates of chemical leavening agent.

In addition to specific chemistries, encapsulated basic chemical leavening agents can be characterized based on their "activity," which refers to the percentage by weight of active basic agent that is contained in encapsulated particles, based on the total weight of active basic agent and encapsulating material that make up the particles. According to the invention, useful activities of an encapsulated basic chemical leavening agent can be any activity that provides a desired amount of exposure of the basic agent to a dough composition either during processing or during baking. Examples of useful activities can be, e.g., at least 30 percent, 50 percent, 60 percent, 70 or 75 percent.

Certain specific embodiments of dough compositions according to the invention can contain one or more different types of basic agent, either a single type of basic agent or single degree of encapsulation, or a combination of basic agents having different degrees of encapsulation e.g., from non-encapsulated "free" soda, to encapsulated soda of varying degrees of encapsulation and activity.

The total amount of a single type or activity of basic chemical leavening agent, or a combination of two or more different types or activities of basic agents, that may be included in a dough composition according to the invention, can be any useful or desired amount, e.g., an amount sufficient to react with a total amount of acidic chemical leavening agent to release a desired amount of carbon dioxide gas for leavening at the various stages of packaging, refrigerated storage, and cooking. Desirably, the one or more types of basic agent (in combination with one or a combination of acidic agents) can produce sufficient expansion of the dough product during processing and packaging to cause a package to become sealed from expansion of the dough composition inside of the container. Also desirably, the amount of additional expansion during refrigerated storage is controlled to prevent excessive build of internal pressure and to prevent bursting of the packaged dough during refrigerated storage. Also, a desired amount of basic agent (e.g., encapsulated basic agent), and acidic agent, become active during cooking to produce carbon dioxide.

The typical amount of total basic chemical leavening agent (not including the weight of any encapsulating material) may be any useful amount, with an example of useful amounts being in the range from about 0.5 to about 3 weight percent based on total weight of a dough composition, e.g., from about 0.75 to about 1.5 weight percent based on total weight of a dough composition.

For embodiments of the invention that include two types of basic agent, e.g., encapsulated and non-encapsulated basic agents, or two different encapsulated basic agents having, e.g., different activity levels, each type or activity ofbasic agent can be present to produce desired carbon dioxide evolution during processing (e.g., packaging) and during cooking. An amount of non-encapsulated or free soluble basic chemical leavening agent that can react to produce carbon dioxide during processing or refrigerated storage (e.g., upon packaging), e.g., one or a combination of soda, i.e., sodium bicarbonate (NaHCO₃), potassium bicarbonate (KHCO₃), ammonium bicarbonate (NH₄HCO₃), etc., can be an amount in the range from 0.25 to 3 weight percent basic chemical leavening agent, e.g., from 0.5 to 2 weight percent. An amount of encapsulated basic chemical leavening agent that can react to produce carbon dioxide during cooking, e.g., one or a combination of encapsulated soda, i.e., sodium bicarbonate (NaHCCO₃), potassium bicarbonate (KHCO₃), ammonium bicarbonate (NH₄HCO₃), etc., having an activity of at least 30 percent, 50 percent, 60 percent, 70 or 75 percent, can be an amount in the range from 0.25 to 3 weight percent basic chemical leavening agent (not including the weight or the encapsulating agent), e.g., from 0.5 to 2 weight percent.

Chemically leavened dough compositions of the invention can be any of various different types of dough compositions that are often sold commercially. Sometimes different dough compositions can be classified into developed or non-developed doughs. The degree of development of a dough (as in a "developed" versus a "non-developed" dough) generally refers to the strength of a dough's matrix, as the strength relates to the degree of development of gluten (protein) in a dough matrix, During processing of a dough composition, gluten can be caused or allowed to interact or react and "develop" a dough composition in a way that increases the stiffness, strength, and elasticity of the dough. Doughs commonly referred to as "developed" doughs are generally understood to include doughs that have a relatively highly-developed gluten matrix structure; a stiff, elastic rheology; and (due to the stiff, elastic matrix) are well able to form bubbles or cells that can stretch without breaking to hold a leavening gas while the dough expands, leavens, or rises, prior to or during cooking (e.g., baking). Features that are sometimes associated with a developed dough, in addition to a stiff, elastic rheology, include a liquid content, e.g., water content, that is relatively high compared to non-developed doughs; a sufficient (e.g., relatively high) protein content to allow for a highly-developed structure; optionally, processing steps that include time to allow the dough ingredients (e.g., gluten) to interact and "develop" to strengthen the dough; and on average a baked specific volume that is relatively higher than non-developed doughs. Oftentimes, developed doughs are yeast-leavened, but may be chemically leavened. Examples of specific types of doughs that can be considered to be developed doughs include doughs for pizza crust, breads (loaves, dinner rolls, baguettes, bread sticks), raised donuts, cinnamon rolls, croissants, Danishes, pretzels, etc.

As compared to "developed" doughs, doughs commonly referred to as non-developed doughs (or "un-developed" or "under-developed") have a relatively less developed ("undeveloped") dough matrix that gives the dough a relatively non-elastic rheology, reduced strength, and reduced gas-holding capacity. Being less elastic than a developed dough and exhibiting a reduced gas-holding capacity, non-developed doughs, on average, exhibit relatively lower raw and baked specific volumes. Examples of non-developed types of dough compositions include cake doughnuts, muffins, biscuits (e.g., soda biscuits), and the like.

A chemically-leavened dough composition according to the invention can include chemical leavening agents as described herein, along with other dough ingredients as known in the dough and baking arts, or as developed in the future to be useful with chemically-leavened dough compositions.

A flour component can be any suitable flour or combination of flours, including glutenous and nonglutenous flours, and combinations thereof. The flour or flours can be whole grain flour, flour with the bran and/or germ removed, or combinations thereof. Typically, a dough composition can include between about 30 and about 50 weight percent flour, e.g., from about 35 to about 45 weight percent flour, based on the total weight of a dough composition.

Examples of liquid components include water, milk, eggs, and oil, or any combination of these, as will be understood to be useful in chemically-leavened, non-developed dough compositions. For example, a liquid component may be water (added as an ingredient and as part of other ingredients), e.g., in an amount in the range from about 15 to 35 weight percent, e.g., from 25 to 35 weight percent, although amounts outside of this range may also be useful. Water may be added during processing in the form of ice, to control the dough temperature in-process; the amount of any such water used is included in the amount of liquid components. The amount of liquid components included in any particular dough composition can depend on a variety of factors including the desired moisture content of the dough composition.

A dough composition can optionally include fat ingredients such as oils and shortening. Examples of suitable oils include soybean oil, corn oil, canola oil, sunflower oil, and other vegetable oils. Examples of suitable shortenings include animal fats and hydrogenated vegetable oils. Fat may be used in an amount less than about 20 percent by weight, often in a range from 5 or 10 weight percent to 20 weight percent fat, based on total weight of a dough composition.

A dough composition can optionally include one or more sweeteners, either natural or artificial, liquid or dry. Examples of suitable dry sweeteners include lactose, sucrose, fructose, dextrose, maltose, corresponding sugar alcohols, and mixtures thereof

Dough compositions described herein can be prepared according to methods and steps that are known in the dough and dough product arts. These can include steps of mixing or blending ingredients, folding, lapping, forming, shaping, cutting, rolling, filling, etc., which are steps well known in the dough and baking arts.

Embodiments of packaged dough products of the invention relate to a packaged dough product that contains a chemically leavened dough composition packaged in a pressurized package. A pressurized-type package includes various specific types of packages that may be used for storing refrigerated dough products, being of the type that include a pressure internal to the package that is substantially greater than ambient eternal pressure (approximately 1 atmosphere, absolute). Typically, such pressurized packages, when used with prior dough compositions (not according to the invention), would exhibit an internal pressure that would exceed of 14 or 15 psi gauge (28 or 30 psi absolute), at least at some point in time after packaging or during refrigerated storage. According to the invention, however, a pressurized package can exhibit an internal pressure that is greater than ambient atmospheric pressure, but that does not rise to the same internal pressures that are exhibited by conventional pressurized packaged dough products during similar periods of refrigerated storage.

An example of a pressurized-type of a container or package is a pressurized can or canister in the form of a wound cylindrical (tubular) package, often made of wound cardboard with self-sealing metal ends. According to known methods, a chemically leavenable dough composition can be placed inside of such a canister-style package soon after the dough composition has been prepared from its ingredients. The ends of the canister package can then be closed or covered with the end caps. Due to reaction of chemical leavening agents in a dough composition as described herein, upon placing a dough composition into an unsealed canister, leavening agents of the dough composition react to produce carbon dioxide and to cause the dough composition to expand while inside of the canister. The evolving carbon dioxide and expansion cause the dough composition to fill the inside space of the container and eliminate atmospheric gas (e.g., air) in the headspace. Upon filling the container, the expanding dough composition also causes the container to become sealed from the inside. The dough composition, at the time it is placed in the unsealed container, may exhibit a raw specific volume of an unproofed or partially proofed dough composition, e.g., a raw specific volume in the range from 0.9 to 1.5 cubic centimeters per gram, sometimes a raw specific volume in the range from 0.9 to 1.2 cubic centimeters per gram.

Further production of carbon dioxide by the dough composition during or after the packaging and sealing step and during refrigerated storage will increase the internal pressure within the sealed canister. According to the invention, the chemical leavening agents of the dough composition in the sealed package are selected to produce sufficient carbon dioxide to cause the dough composition to expand and seal the container, as described immediately above, and to increase the internal pressure of the pressurized package in a controlled manner. The chemical leavening agents are selected to control the amount of carbon dioxide production and expansion of the dough composition after packaging and during refrigerated storage, so as not to produce an undesirably high internal pressure within the package during refrigerated storage. A controlled internal pressure can prevent or reduce the possibility of the package bursting during refrigerated storage, and desirably, if possible, may prevent or subdue the "popping" noise that may otherwise startle a consumer upon opening the pressurized package.

According to certain specific embodiments of the invention, internal pressure of a packaged dough composition can be controlled to be maintained below 14 or 15 psig over 12 weeks of refrigerated storage at 40 or 45°F (4 or 7°C), with maximum internal pressures of from 4 to 10 psig being achieved [over 12 weeks of refrigerated storage at 40 or 45°F (4 or 7°C)] according to certain embodiments of the invention. For example, dough compositions of the invention that include two or more different acidic chemical leavening agents of different solubilities (e.g., relative low solubility SALP and relatively soluble SAPP) may exhibit a maximum internal pressure that is below 6 psig after being stored for 12 weeks at 40 or 45°F (4 or 7°C). Dough compositions of the invention that include two or more different basic chemical leavening agents, e.g., encapsulated soda and free soda, may exhibit a maximum internal pressures of below 10 psig, e.g., from 6 to 8 psig, after being stored for 12 weeks at 40 or 45°F (4 or 7°C).

An example of a canister package can be in the form of a tube, having a circular cross section that can be formed by wrapping the tube around an appropriately shaped mandrel (other cross-sectional shapes may also be formed). The canister may be formed by known methods and using known materials, e.g., by preparing a body wall comprising at least one body ply that is preferably formed of a strip of wound paperboard or cardboard. Edges of the strip of the body ply can be square and butted together and are not necessarily adhered together so as to facilitate easy opening. The ends of a canister can be formed from suitable materials, such as metal caps. Other types of end closures that can be used include paperboard ends (which are in the form of a plug inside the tubular body wall); ends having a metal flange and a membrane-type lid adhered thereto; and membrane-type lids adhered directly to the ends of the body ply, depending on the application.

According to certain embodiments of the invention, the dough composition can be packaged in a self-sealing canister-type of a container, in an unproofed condition (e.g., having a raw specific volume of from 0.9 to 1). The dough composition, as described herein, will produce carbon dioxide due to reaction of chemical leavening agents, thereby causing the dough composition to expand and purge, fill, and seal the package. Upon such expansion within the package, the dough composition may exhibit a raw specific volume of a partially proofed dough composition, e.g., in the range from 1 to 1.2 or 1.5 cc/g. The dough composition may continue to produce some amount of carbon dioxide during refrigerated storage, due to reaction of chemical leavening agents, but, as indicated herein, the amount is desirably controlled to produce a controlled internal pressure during refrigerated storage. Upon removal from the pressurized package following refrigerated storage, the dough composition may experience a small amount of expansion because of the release of the dough composition from the pressure of the pressurized canister. Upon removal from the pressurized, the dough composition may exhibit a raw specific volume in the range from 1.2 to 1.8 cubic centimeters per gram, e.g., from 1.4 to 1.6 cubic centimeters per gram.

In terms of internal pressure of a packaged dough composition, embodiments of dough compositions according to the invention expand following packaging and during refrigerated storage to produce an internal pressure that may not result in a high percentage of bursting of packaged products, and that may not result in a loud "pop" upon opening of the package by a consumer following refrigerated storage.

According to specific embodiments of the invention, a dough composition can expand during baking to exhibit a baked specific volume in the range from 2 to 4 cubic centimeters per gram. The specific volume that is achieved by any particular dough composition of the invention can depend on various factors such as the dough formulation, and, e.g., whether the dough is a developed or a non-developed type of dough.

In the following preferred embodiments of the present application are summarized:
1. A chemically-leavened dough composition packaged in a pressurized container, the dough composition including dough ingredients that include a chemical leavening system comprising acidic chemical leavening agent and two portions of basic chemical leavening agents
   a processing leavening portion comprising basic chemical leavening agent that reacts to cause the dough to expand at a processing temperature to substantially seal the pressurized container, and
   a cooking leavening portion comprising basic chemical leavening agent that reacts to produce carbon dioxide during cooking.
2. The composition of item 1 wherein
   the processing leavening portion is non-encapsulated basic chemical leavening agent and
   the cooking leavening portion is encapsulated basic chemical leavening agent,
   wherein the relative amounts of encapsulated to non-encapsulated basic chemical leavening agent are in the range from 20:80 to 80:20 based on total weight basic chemical leavening agent.
3. The composition of item 2 comprising
   from 0.25 to 2 weight percent non-encapsulated basic chemical leavening agent, and
   from 0.25 to 2 weight percent encapsulated basic chemical leavening agent, and
   from 0.25 to 3 weight percent non-encapsulated acidic chemical leavening agent,
   based on the total weight of the dough composition.
4. The composition of item 3 wherein the encapsulated basic chemical leavening agent has an activity in the range from 30 to 75 percent.
5. The composition of item 3 wherein the acidic chemical leavening agent is selected from the group consisting of sodium acid pyrophosphate, sodium aluminum phosphate, and combinations thereof.
6. The composition of item 1 wherein the dough composition does not contain yeast.
7. The composition of item 1 comprising
   acidic chemical leavening agent selected from the group consisting of sodium acid pyrophosphate, sodium aluminum phosphate, and combinations thereof,
   processing chemical leavening portion comprising non-encapsulated basic chemical leavening agent, and
   cooking chemical leavening portion comprising encapsulated basic chemical leavening agent.
8. The composition of item I wherein the composition is a biscuit.
9. A dough product comprising chemically-leavened dough composition in a pressurized can, the dough composition comprising dough ingredients that include chemical leavening agent comprising
   basic chemical leavening agent,
   sodium acid pyrophosphate acidic chemical leavening agent that can cause the dough to expand within the canister to produce an internal pressure that does not exceed 5 pounds per square inch gauge after 4 days of refrigerated storage at 45°F (7°C), and
   sodium aluminum phosphate acidic chemical leavening agent that can react to produce carbon dioxide during cooking.
10. The dough product of item 9 wherein the internal pressure does not exceed 6 pounds per square inch gauge after 12 weeks at 45°F (7°C).
11. The dough product of item 9 wherein the basic chemical leavening agent is non-encapsulated.
12. The dough product of item 9 comprising
   from 0.25 to 2 weight percent non-encapsulated basic chemical leavening agent, and
   from 0.25 to 2 weight percent sodium acid pyrophosphate, and
   from 0.25 to 3 weight percent sodium aluminum sulphate,
   based on the total weight of the dough composition.
13. The dough product of item 9 wherein the dough composition is laminated.
14. A refrigerator-stable dough product comprising a chemically-leavened dough composition in a self sealing pressurized container, the dough composition comprising dough ingredients that include
   chemical leavening agent comprising
   basic chemical leavening agent,
   sodium acid pyrophosphate, and
   sodium aluminum phosphate,
   wherein the chemical leavening agents are sufficient to produce carbon dioxide to expand the dough composition to substantially seal the self sealing pressurized container, and maintain an internal pressure within the container that does not exceed 8 pounds per square inch gauge during the first 12 weeks of refrigerated storage at 45°F (7°C).
15. The dough product of item 14 wherein the dough composition comprises
   from 0.25 to 3 weight percent non-encapsulated basic chemical leavening agent,
   from 0.25 to 2 weight percent sodium acid pyrophosphate, and
   from 0.25 to 2 weight percent sodium aluminum phosphate,
   based on the total weight of the dough composition.
16. The dough product of item 14 wherein the dough composition comprises amounts of sodium acid pyrophosphate to sodium aluminum phosphate in the range from 20:80 to 50:50.
17. The dough product of item 14 comprising a developed dough.
18. The dough product of item 14 comprising a laminated dough.
19. A method of preparing a chemically-leavened dough composition packaged in a pressurized container according to item 1, the method comprising
   providing dough ingredients comprising a chemical leavening system comprising acidic chemical leavening agent and two portions of basic chemical leavening agent:
   a processing leavening portion comprising basic chemical leavening agent that reacts to cause the dough to expand at a processing temperature to substantially seal the pressurized container, and
   a cooking leavening portion comprising basic chemical leavening agent that reacts during cooking to expand the dough during cooking,
   combining the dough ingredients,
   - placing the dough ingredients in a self-sealing canister and allowing the dough composition to expand to substantially seal the canister, and
   storing the canister at refrigerated conditions.
20. A method of preparing a chemically-leavened dough composition in a pressurized can according to item 9, the method comprising
   providing dough ingredients that include chemical leavening agent comprising
   basic chemical leavening agent,
   a processing portion of acidic chemical leavening agent comprising sodium acid pyrophosphate, that can cause the dough to expand within the canister to produce an internal pressure that does not exceed 5 pounds per square inch gauge after 4 days of refrigerated storage at 45°F (7°C), and
   a cooking portion of acidic chemical leavening agent comprising sodium aluminum phosphate that can react to produce carbon dioxide during cooking,
   combining the dough ingredients,
   placing the dough ingredients in a self-sealing canister and allowing the dough composition to expand to substantially seal the canister, and
   storing the canister at refrigerated conditions.

### EXAMPLES

### EXAMPLE 1

Biscuits with encapsulated soda and free soda

### Materials & Methods:

- Variable:: Balchem F0901 Encapsulated Soda, 60%(activity)/110 F (melting point of encapsulating material)
- Runs:: 1-Control w/can weight of 485.9 g 2-30% (not including weight of encapsulating material) E-Soda w/can weight of 485.9 g 3-50% (not including weight of encapsulating material) E-Soda w/can weight of 611,9 g

Product heights, spreads, specific volumes, color and flavor, evaluated at 2, 4, 8, and 12 weeks.

Mixing Procedure:
1. A horizontal bar mixer was used. Turn brine jacket on 30 minutes prior to mixing first batch to cool mixer. Program mixer first cycle for 30 seconds @ 36 rpm, 210 seconds @ 72 rpm and second cycle for 30 seconds @ 36 rum, 210 seconds @ 72 rpm.
2. Weigh out water as needed. Add liquid minors to water and blend. Record water temperature before adding to mixer.
3. Weigh both hard and soft flour. Add dry minors and blend thoroughly with either wire whip or large spatula.
4. Add water to mixer. Add first cycle dry ingredients to mixer. Mix first cycle.
5. When first cycle is complete, open mixer. Blend second cycle dry ingredients in bucket. Cut dough off of the mixer bars and into approximately double fist-sized chunks. As the dough is cut add some of the dry ingredients and shortening chips. Jog mixer and continue cutting the dough and adding ingredients until all of the dough is off of the mixer bars and all of the ingredients have been added. When all of the second cycle ingredients have been added close the mixer.
6. Mix second cycle. When the cycle is complete open mixer and discharge dough into oiled dough trough.
7. Measure dough temperature and take samples for rheology tests.

Doughs for Run 1 and Run 2 sheeted on Rondo sheeter down to 16 mm, given one 3-fold and turned 90°F (32°C) and sheeted down to 16 mm for final pad thickness. Dough for Run 3 was sheeted down to 18 mm.

### Data & Observations:

| INGREDIENT | 1. Control | 2. 30% E-Soda | 3. 50% E-Soda |
|---|---|---|---|
| | wt % | wt % | wt % |
| 1^{st} Cycle | | | |
| Flour, hard | 37.900 | 37.900 | 37.900 |
| Flour, soft | 9.480 | 9.480 | 9.480 |
| Water | 26.290 | 26.290 | 26.290 |
| Xanthan (dissolve in 10 GM water) | 0.130 | 0.130 | 0.130 |
| K sorbate, 10% soln. | 0.140 | 0.140 | 0,140 |
| Buttermilk solids | 3.000 | 3.000 | 3.000 |
| | | | |

| 2^{nd} Cycle | | | |
|---|---|---|---|
| Soda | 0.970 | 0.700 | 0.500 |
| SAPP | 1.120 | 1.120 | 1.120 |
| SALP | 0.170 | 0.170 | 0.170 |
| Salt | 1.300 | 1.300 | 1.300 |
| Sugar | 5.540 | 5.500 | 5.500 |
| Shortening chips | 14.000 | 14.000 | 14.000 |
| E-soda, 60%/110 F, Balchem F0901 (this amout includes encapsulating material) | | 0.500 | 0.833 |
| TOTALS | 100.000 | 100.230 | 100.363 |

| | | | | |
|---|---|---|---|---|
| Flour Adjustment | | | | |
| Water Adjustment | | | | |
| Water Temperature | | 52.40 | 50.50 | 51.00 |
| Ice Level, grams | | 0.00 | 0.00 | 0.00 |
| Mix Time | - 1^{st} Cycle | 30/210 | 30/210 | 30/210 |
| | - 2^{nd} Cycle | 30/210 | 30/210 | 30/210 |
| Dough Temperature | | 64.00 | 64.00 | 63.00 |
| Farinograph - Time Read | | 5.00 | 1.75 | 1.50 |
| - Peak Reading | | 1040.00 | 950.00 | 940.00 |
| BU | | | | |
| Extensibility | | 85.00 | 132.00 | 95.00 |
| Rmax | | 720.00 | 750.00 | 520.00 |

### Pack weights:

Control and batch #2: 476 GM target and 56.5-62.5 GM/biscuit

Batch #3: 530 GM target and 63-69 GM/biscuit

### EXAMPLE 2

Low Pressure Crescents were prepared using varied amounts of relatively soluble SAPP, and relatively insoluble SALP, with free soda. The dough pieces were stored at refrigeration in a pressurized can.

### Materials & Methods:

| | |
|---|---|
| Doughs: | 62%/34% SAPP/SALP (Control) |
| | 38%/62% SAPP/SALP (Batch 2) |
| | 25%/75% SAPP/SALP (Batch 3) |

Product was placed in a wound cardboard, self-sealing pressurized, canister and stored in 45°F (7°C) cooler.
Pressure measurements recorded at Day 1 and then weekly.

### Data & Observations:

| SV: | | Weight |
|---|---|---|
| Control: | 2.94 | 171.16 g |
| Batch 2: | 3.03 | 170.58 g |
| Batch 3: | 3.21 | 167.3 g |

Can Noise at 1 week:

| | |
|---|---|
| Control: | Can had a very slight "pop" sound. |
| Batch 2: | Can does not have a "pop" sound. Slight graying on one end. |
| Batch 3: | Can does not have a "pop" sound. Slight graying on one end. |

Can Noise at 86 Days:

| | |
|---|---|
| Control: | Can "pops" sounds formal |
| Batch 2: | Can had a very slight "pop" sound. |
| Batch 3: | Can does not have a "pop" sound. Can seam barely separates when |
| label is removed. Dough felt tackier/wetter than the control dough. | |

| INGREDIENT | 1, Control | 2 .38/62 | 3. 25/75 |
|---|---|---|---|
| | wt % | SAPP/SALP | SAPP/SALP |
| | | wt% | wt% |
| 1^{st} cycle | | | |
| Water | 30.24 | 30.24 | 30.24 |
| Ice | | | |
| Flour | 52.82 | 52.82 | 52.82 |
| Shortening | 2.48 | 2.48 | 2.48 |
| K sorbate sol. (10% aq.) | 0.25 | 0.25 | 0.25 |
| CaCl sol. (9% aq.) | 0.19 | 0.19 | 0.19 |
| Color sol. | 0.02 | 0.02 | 0.02 |
| Datem | 0.52 | 0.52 | 0.05 |
| Xanthan | 0.08 | 0.08 | 0.08 |
| Wheat gluten | 1.55 | 1.55 | 1.55 |
| | | | |

| 2^{nd} Cycle | | | |
|---|---|---|---|
| Soda (free) | 1.12 | 1.12 | 1.12 |
| SAPP | 0.98 | 0.58 | 0.38 |
| SALP | 0.38 | 0.70 | 0.84 |
| Potassium chloride | 0.41 | 0.41 | 0.41 |
| Salt | 0.97 | 0.97 | 0.97 |
| Sugar | 8.00 | 8.00 | 8.00 |
| TOTALS | 100.000 | 99.91 | 99.40 |

| | |
|---|---|
| Mix 1^{st} Cycle: | 30 secs @ 36 rpm |
| | 1 min @ 72 rpm |
| Mix 2^{nd} Cycle: | 30 secs @ 36 rpm |
| | 4 min @ 72 rpm |

| | |
|---|---|
| Potassium Sorbate Solution | 1,000.0 |
| Water | 90.00 |
| Potassium Sorbate Solution | 10.00 |
| | 100.00 |

| | |
|---|---|
| Calcium Chloride Solution | 1,000.0 |
| Water | 90.91 |
| Calcium Chloride | 9.09 |
| | 100.00 |

Sheeted & Laminated with fat, cut & rolled. The package in standard composite can with single crimp.

The above description includes specific embodiments of the present invention, and is not to be limited to any particular composition or combination of features. As will be understood by those of skill, other embodiments of this invention will be apparent upon consideration of this specification or from practice of the invention disclosed herein. Various omissions, modifications, and changes to the principles and embodiments described herein may be made by one skilled in the art without departing from the scope and spirit of the invention which is indicated by the following claims.

## Claims

1. A dough product comprising chemically-leavened dough composition in a pressurized can, the dough composition comprising dough ingredients that include chemical leavening agent comprising
basic chemical leavening agent,
sodium acid pyrophosphate acidic chemical leavening agent that can cause the dough to expand within the canister to produce an internal pressure that does not exceed 5 pounds per square inch gauge after 4 days of refrigerated storage at 45°F (7°C), and
sodium aluminum phosphate acidic chemical leavening agent that can react to produce carbon dioxide during cooking.

2. The dough product of claim wherein the internal pressure does not exceed 6 pounds per square inch gauge after 12 weeks at 45°F (7°C).

3. The dough product of claim 1 wherein the basic chemical leavening agent is non-encapsulated.

4. The dough product of claim 1 comprising
from 0.25 to 2 weight percent non-encapsulatcd basic chemical leavening agent, and
from 0.25 to 2 weight percent sodium acid pyrophosphate, and
from 0.25 to 3 weight percent sodium aluminum sulphate,
based on the total weight of the dough composition.

5. The dough product of claim 1 wherein the dough composition is laminated.

6. A refrigerator-stable dough product comprising a chemically-leavened dough composition in a self sealing pressurized container, the dough composition comprising dough ingredients that include
chemical leavening agent comprising
basic chemical leavening agent,
sodium acid pyrophosphate, and
sodium aluminum phosphate,
wherein the chemical leavening agents are sufficient to produce carbon dioxide to expand the dough composition to substantially seal the self sealing pressurized container, and maintain an internal pressure within the container that does not exceed 8 pounds per square inch gauge during the first 12 weeks of refrigerated storage at 45°F (7°C).

7. The dough product of claim 6 wherein the dough composition comprises
from 0.25 to 3 weight percent non-encapsulated basic chemical leavening agent,
from 0.25 to 2 weight percent sodium acid pyrophosphate, and
from 0.25 to 2 weight percent sodium aluminum phosphate,
based on the total weight of the dough composition.

8. The dough product of claim 6 wherein the dough composition comprises amounts of sodium acid pyrophosphate to sodium aluminum phosphate in the range from 20:80 to 50:50.

9. The dough product of claim 6 comprising a developed dough.

10. The dough product of claim 6 comprising a laminated dough.

11. A method of preparing a chemically-leavened dough composition, in a pressurized can according to claim 1, the method comprising
providing dough ingredients that include chemical leavening agent comprising
basic chemical leavening agent,
a processing portion of acidic chemical leavening agent comprising sodium acid pyrophosphate, that can cause the dough to expand within the canister to produce an internal pressure that does not exceed 5 pounds per square inch gauge after 4 days of refrigerated storage at 45°F (7°C), and
a cooking portion of acidic chemical leavening agent comprising sodium aluminum phosphate that can react to produce carbon dioxide during cooking,
combining the dough ingredients,
placing the dough ingredients in a self-sealing canister and allowing the dough composition to expand to substantially seal the canister, and
storing the canister at refrigerated conditions.
